# EUROPEAN PATENT SPECIFICATION

(11) **EP 1 230 802 B1**
(45) Date of publication and mention of the grant of the patent: **28.01.2004**
(21) Application number: 00974047.3
(22) Date of filing: 31.10.2000
(51) Int. Cl.: H04N 7/24

(54) **MPEG-4 VIDEO SPECIFIC CONTROL PACKET FOR PROVIDING A CUSTOMIZED SET OF CODING TOOLS**
MPEG-4 VIDEOSPEZIFISCHES KONTROLLPAKET ZUR LIEFERUNG VON PERSONALISIERTEN KODIERUNGSWERKZEUGEN
PAQUET DE COMMANDE SPECIFIQUE A UN CONTENU VIDEO MPEG-4 PERMETTANT D'OBTENIR UN ENSEMBLE PERSONNALISE D'OUTILS DE CODAGE

(30) Priority: 12.11.1999 US 165342 P
(43) Date of publication of application: 14.08.2002
(73) Proprietor: General Instrument Corporation, Horsham, Pennsylvania 19044 (US)
(72) Inventor: CHEN, Xuemin, San Diego, CA 92129 (US); LUTHRA, Ajay, San Diego, CA 92130 (US)
(74) Representative: Regelmann, Thomas, Dr.
(86) International application number: PCT/US2000/029970
(87) International publication number: WO 2001/037573

(56) References cited:
- EP-A- 0 577 377
- EP-A- 0 762 777
- EP-A- 0 917 369
- KOENEN R: "Overview of the MPEG-4 Standard - N2725" INTERNATIONAL ORGANISATION FOR STANDARDISATION - ORGANISTAION INTERNATIONALE DE NORMALISATION, ISO/IEC JTC1/SC29/WG11, March 1999 (1999-03), pages 1-46, XP002163293 Seoul

## Description

### BACKGROUND OF THE INVENTION

The present invention relates to a control packet format for streaming video coding, such as MPEG-4 video coding. The invention is particularly useful for developing streaming video products for multicast video over Internet Protocol (IP) networks, such as the Internet.

MPEG-4 Visual, specified by the Moving Picture Experts Group in ISO/IEC 14496-2, *Information technology, Generic coding of audio-visual objects, Part2 : Visual*, October, 1998, is a multimedia standard which specifies coding of audio and video objects, both natural and synthetic, a multiplexed representation of many such simultaneous objects, as well as the description and dynamics of a scene containing these objects. MPEG-4 is efficient for bitrates ranging from 10 Kbit/s to 10 Mbit/s. The work done by the International Telecommunications Union (ITU-T) for the standard referred to as H.263+ is of relevance for MPEG-4, since H.263+ is an extension of H.263, and H.263 was also one of the starting points for MPEG-4. However, MPEG-4 is a more complete standard due to its ability to address a very wide range and type of applications, extensive systems support, and tools for coding and integration of natural and synthetic objects. MPEG-4 added numerous coding tools to provide more functionality and to improve coder/decoder (codec) performance over H.263. However, the completeness of MPEG-4 video also makes a "complete" decoder hard to build since it would be expensive and complicated to build a decoder that could handle all possible coding tools.

Moreover, it is expected that a wide range of applications will be developed around MPEG-4. These applications will use different subsets of the coding tools available in MPEG-4. International Standards Organization specification ISO/SC29/WG-11 is addressing this issue by creating profiles, as was done for MPEG-2. However, in MPEG-4, the expected range of applications is significantly wider than that for MPEG-2. This forces the creation of a large number of profiles. To reduce the number of profiles, the requirements of potentially overlapping applications are blended together to combine them in a smaller number of profiles. However, this creates profiles that are inefficient for a large number of applications. Moreover, despite the aforementioned effort, the pressure of an increasing number of applications will continue to increase the number of profiles required.

Additionally, MPEG-4 video can be applied to a wide variety of services over the Internet, including real time video streaming, video on demand, multicast, unicast, and the like. However, the profiles specified coarsely in MPEG-4 video cannot fulfill the need of these applications, e.g., due to the large number of possible types of networks. That is, coding tools that are specified for one specific network application may not necessarily be suitable for other applications.

EP-A-0 762 777 discloses a picture producing apparatus which transmits coded picture data and an algorithm for reproducing (decoding) the coded picture data and reconfigures a decoding processor in accordance with the received algorithm.

EP-A-0 917 369 discloses a transmitter for transmitting encoded video data and audio data which also transmits a decoding method generated by decoding-method generation means.

EP-A-0 577 377 discloses an image processing method comprising an input step for inputting image information, a determination step for determining a characteristic of the image information, a selecting step for selecting a compression procedure which is suitable to the characteristic of the information determined by said determination step, a compression step for compressing the image information by the compression procedures selecting by said selection step and an output step for outputting the image information compressed by the compression step.

Accordingly, it would be desirable to provide a system to specify coding tools for applications which are not covered by a specific profile.

The system should specify which coding tools are used for a specific real-time video streaming application over a specific network. The technique should inform decoders that receive the video data (e.g., at a personal computer, television set-top box, cable modem, or the like) which coding tools have been used.

The coding tools should be specified for a non-profiled bitstream (where a conventional profile is not used). For example, for some network applications, some non-profiled bitstreams can provide better performance in terms of coding performance vs. codec (coder/decoder) complexity.

The system should allow the use of a customized set of coding tools that does not correspond to any predetermined coding profile.

The system should take advantage of a control packet that is already set up, and avoid the need to establish an extra connection.

The system should be compatible with a transport protocol for real-time applications, such as the real-time transport protocol (RTP), defined in "RTP: A transport protocol for real-time applications," RFC 1889, January 1996.

The real-time transport protocol (RTP) was designed as a flexible protocol capable of transporting real-time data over multicast or unicast. This protocol has been widely deployed and used extensively for transmitting real-time (or near real-time) multimedia streams. RTP does not address resource reservation and does not guarantee quality-of-service for real-time service. The data transport is augmented by a control protocol (RTCP) to allow monitoring of the data delivery in a manner scalable to large multicast networks, and to provide minimal control and identification functionality.

RTP is an Internet standards track protocol that provides end to-end delivery services for data with real-time characteristics, such as interactive audio and video. Those services include payload type identification, sequence numbering, timestamping and delivery monitoring.

RTP is primarily designed to satisfy the needs of multi-participant multimedia conferences, and may also be useful for storage of continuous data, interactive distributed simulation, active badge (logo), and control and measurement applications.

The RTP control protocol (RTCP) is used to monitor the quality of service and to convey information about the participants in an on-going session.

However, RTP has not been used previously to provide a mechanism for designating coding tools for streaming video applications.

The present invention provides a system having the above and other advantages.

### SUMMARY OF THE INVENTION

The present invention relates to a control packet format for streaming video coding.

In accordance with claim 1, a method for signaling at least one decoder to identify coding tools used to encode a video stream is provided.

In accordance with independent claim 12, a decoding method for identifying coding tools used to encode a video stream is provided.

In accordance with claim 23, an apparatus for signaling a decoder to identify coding tools used to encode a video stream is provided.

In accordance with claim 24, a decoder apparatus for identifying coding tools used to encode a video stream is provided.

The present invention looks beyond the MPEG-2 philosophy and goes back to the original sentiment and philosophy of flexibility in MPEG-4. It is expected that when developed, MPEG-4 decoders (and corresponding encoders) will be flexible and hence of varying performance. The concept of graceful degradation of the digital signal and the model of all of the receivers not being the same will be acceptable and will change the outdated meaning of inter-operability.

Therefore, the present invention proposes the creation of a mechanism to allow a signaling or handshake between the sender and the receivers so that a sender can inform the receivers what tools within MPEG-4 it is using to encode a given video signal. To ensure the flexibility of MPEG-4 video for different applications, the invention proposes an MPEG-4 video specific control packet for configuration of MPEG-4 video coding tools. This packet can be sent along with the video stream. As an example, a Real Time Protocol (RTP) is focussed on. A similar goal can be achieved for different systems layers, e.g., a MPEG-2 system via descriptors.

In particular, a coding tools packet may designate a coding status of a video stream regarding one or more of: whether scalability is used, and if so, which type; whether 8-bit coding is used; whether alpha plane coding is used, and if so, which type; whether error-resilient coding tools are used, and if so, which type, whether interlaced coding is used; whether sprite coding is used, and if so, which type; whether B-VOP coding is used, and if so, whether direct mode coding is used; whether intra DC and/or AC prediction is used, and if so, which type; whether advanced prediction is used, and if so, which type; whether quarter pixel coding is used; whether global motion compensation is used; and whether shape-adaptive DCT is used.

The invention therefore allows the use of a customized set of coding tools that does not correspond to any predetermined, inflexible coding profile.

### BRIEF DESCRIPTION OF THE DRAWINGS

FIG. 1 illustrates a Coding-Tool Configuration Map (CTCM) Packet that indicates the required tools for decoding a video bitstream in accordance with the invention.
FIG. 2 illustrates a MPEG-4 Video CTCM Payload format in accordance with the invention.
FIG. 3 illustrates the communication of video packets and CTCM packets from an encoder to a decoder in accordance with the invention.

### DETAILED DESCRIPTION OF THE INVENTION

The present invention relates to a control packet format for streaming video coding.

### I. Optional MPEG-4 Video Specific Control Packets

Although MPEG-4 video can be applied to a wide variety of services over the Internet, including real time video streaming, video on demand, multicast, unicast, and the like, the profiles specified coarsely in MPEG-4 video cannot fulfill the need of these applications, e.g., due to the large number of possible types of networks.

The invention addresses this problem by sending a coding-tool configuration map along with the coded-video packets to the users to provide a customized set of coding tools that need not correspond to any predetermined profile. One way to accomplish this is to send such a configuration map as an MPEG-4-video-specific RTCP control packet. RTCP is a reasonable place into which to put such a control packet because it is already set up and no extra connection needs to be established. Also, the configuration is always set up at the beginning of the transmission or in a less frequent manner, and thus the RTCP interval (e.g., as specified by RFC 1889 above) is well-suited for this MPEG-4-video-specific RTCP control packet. The RTCP interval is the time between the transmission of compound RTCP packets. Typically, multiple RTCP packets are sent together as a compound RTCP packet in a single packet of the underlying protocol; this is enabled by the length field in the fixed header of each RTCP packet.

The following section specifies an MPEG-4-video-specific RTCP control packet, called the "Coding-Tool Configuration Map" (CTCM) packet. The purpose of the CTCM packet is to inform the MPEG-4 video decoder as to which coding tools are included in the packets of a Video Object Layer (VOL) bitstream. Support of this MPEG-4-video-specific control packet by the MPEG-4 sender is optional. In particular, this packet should not be used for the profiled MPEG-4 VOL bitstreams. In such a case, the video decoder must follow the profile definition provided by MPEG-4 visual. This configuration data could also be sent in other related protocols such as Session Description Protocol (SDP), Session Announcement Protocol(SAP) or Real Time Streaming Protocol (RTSP), etc.

### II. Coding-Tool Configuration Map (CTCM) Packet

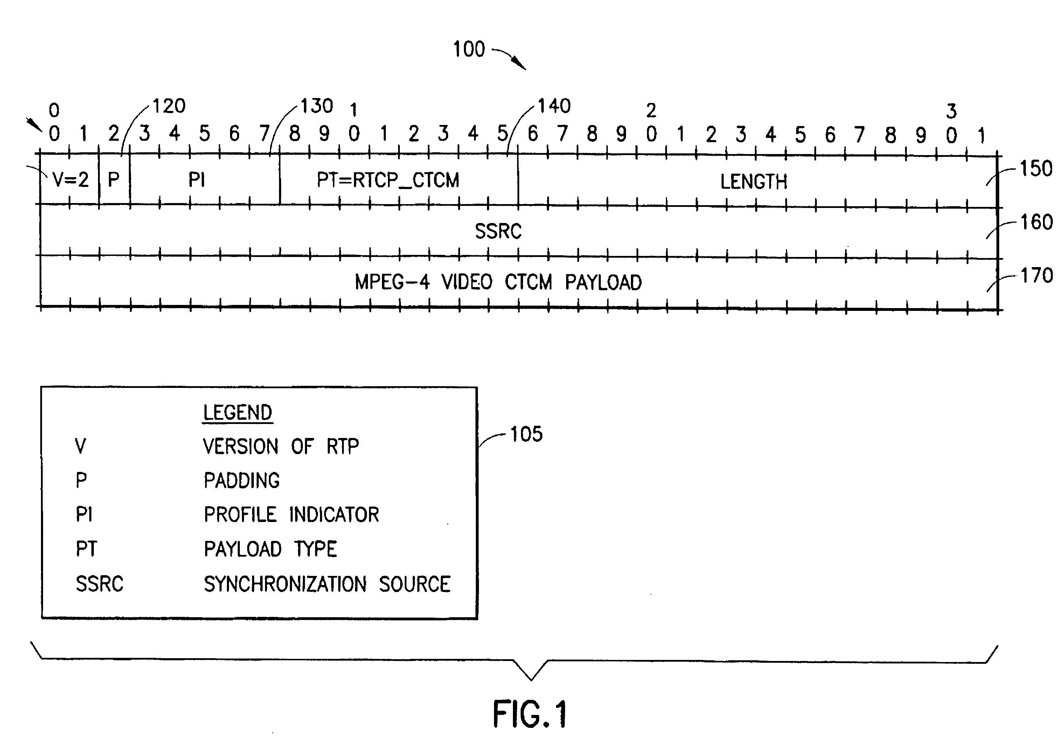

FIG. 1 illustrates a Coding-Tool Configuration Map (CTCM) Packet that indicates the required tools for decoding a video bitstream in accordance with the invention.

As explained in the legend 105, the CTCM packet 100 includes an RTP version field 110, a padding field 120, a profile indicator field 130, a payload type field 140, a length field 150, a SSRC field 160, and a payload field 170.

A scale indicating the number of bits for each field is shown at 102. The bit allocation for each field is shown as an example only, as different allocations may be used.

This packet 100 indicates the required tools for decoding the video bitstream for a non-profiled bitstream (PI=0).

The fields V, P, length and SSRC are defined in the RTP specification, RFC 1889.

In particular:
(1) version (V): 2 bits. This field identifies the version of RTP.
(2) padding (P) : 1 bit. If the padding bit is set, the packet contains one or more additional padding octets at the end which are not part of the payload.
(3) The Profile Indicator (PI) is illustrated as being 5 bits in length, although other implementations are possible. A profile is a set of tools that are specified for a specific application. The PI identifies the profile of an MPEG-4 video bitstream as follows:
   0 : Non-profiled stream
   1: Short header stream
   2: Simple Profile
   3: Core Profile
   4: Main Profile
   5: Advanced Real-Time Simple Profile
   6: Advanced Coding Efficiency Profile
   7-63: reserved

   Only existing profiles are assigned to the PI field defined above. However, it should be appreciated that other developing profiles may be assigned in the future.
   Although the field "PI" indicates the profile, note that there can be various levels of the same profile. For example, for the simple profile (PI=2), there are levels 1, 2 and 3 (see the MPEG-4 specification). The level is specified in the video object headers.
   Moreover, for a non-profiled bitstream (PI=0), the CTCM data is provided in accordance with the invention to indicate which coding tools are used. For a profiled bitstream, the profile specifies the coding tools. PI=1 is the baseline H.263 profile (called the short header in MPEG-4). PI=5 and 6 are specified in the MPEG-4, version 2 specification.
(4) payload type (PT): 8 bits. This field identifies the format of the RTP payload and determines its interpretation by the application. "RTCP_CTCM" designates a CTCM payload in accordance with the invention.
   The payload/packet type (PT) is defined as an 8 bit identifier, the value of which is a constant for the MPEG-4 Coding-Tool Configuration Map. As indicated in FIG. 1, an RTCP payload type will be assigned for this new packet format.
(5) A single extension may optionally be appended to the RTP data (payload) header. The header extension contains a 16-bit "length" field that counts the number of 32-bit words in the extension (e.g., the payload 170 has two words in this example).
(6) Synchronization source (SSRC) is the source of a stream of RTP packets, identified by a 32-bit numeric SSRC identifier carried in the RTP header so as not to be dependent upon the network address. All packets from a synchronization source form part of the same timing and sequence number space, so a receiver groups packets by synchronization source for playback. Examples of synchronization sources include the sender of a stream of packets derived from a signal source such as a microphone or a camera, or an RTP mixer.

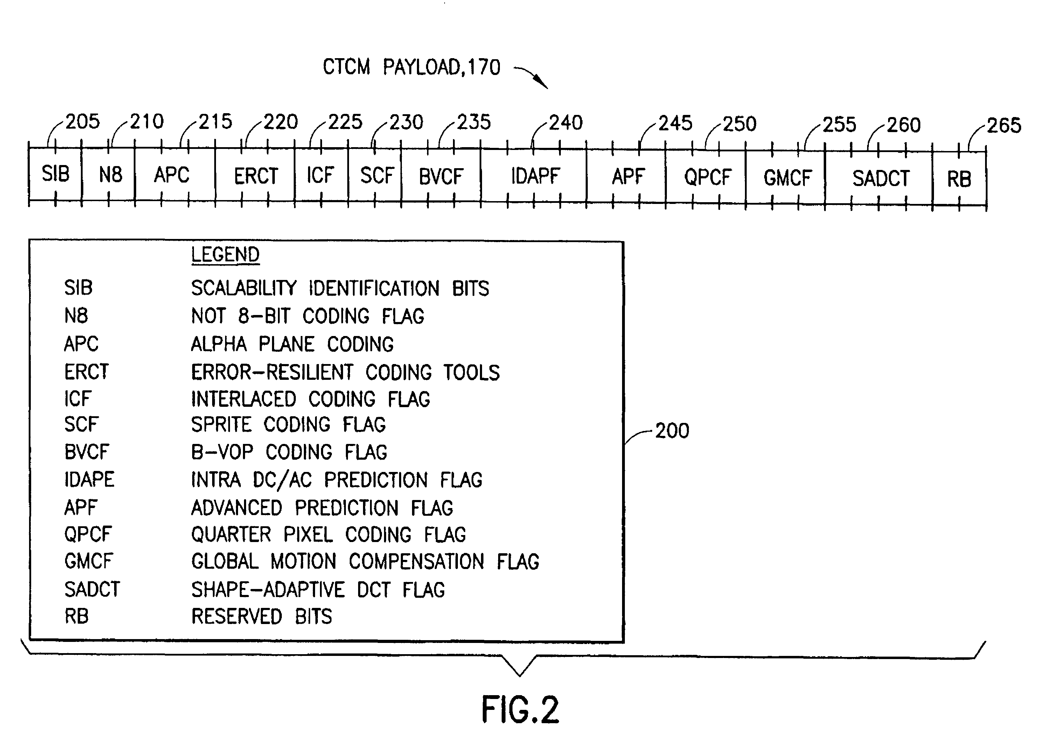

The payload field 170 is discussed further in connection with FIG. 2.

FIG. 2 illustrates a MPEG-4 Video CTCM Payload format in accordance with the invention.

As described in the legend 200, the payload field 170 includes a scalability identification bits field 205, a not 8-bit coding flag 210, an alpha plane coding field 215, an error-resilient coding tools field 220, an interlaced coding flag 225, a sprite coding flag 230, a B-VOP (bi-directionally-predicted video object plane) coding flag 235, an intra DC/AC prediction flag 240, an advanced prediction flag 245, a quarter-pixel coding flag 250, a global motion compensation flag 255, a shape-adaptive DCT (Discrete Cosine Transform) flag 260, and a reserved bits field 265.

This format is shown as an example only, as various modifications apparent to those skilled in the art may be made.

The MPEG-4 Video CTCM Payload is, in the embodiment illustrated, 32 bits in length. The syntax and semantics of the MPEG-4 Video CTCM Payload are defined as follows. The corresponding MPEG-4 terms are indicated. SIB, QPCF, GMCF and SADCTF are specified or configured in the MPEG-4 encoder.

Scalability Identification Bits (SIB) (3 bits) :
000 : no scalability
001 : temporal scalability
010 : spatial scalability
011 : fine granularity scalability
100 : reserved
101 : reserved
110 : reserved
111 : reserved

Not 8-bit Coding Flag (N8) (1 bit) :
0 : without 8-bit coding (not_8_bit=1)
1 : with 8-bit coding (not_8_bit=0)

Alpha Plane Coding (APC) (2 bits) :
00 : no alpha plane coding
   (video_object_layer_shape ="00")
01 : binary alpha plane coding
   (video_object_layer_shape ="01")
10 : gray-level alpha plane coding
   (video_object_layer_shape ="10")
11 : forbidden

Error-Resilient Coding Tools (ERCT) (3 bits) :
000 : no RVLC, no data partition, no video packet (reversible_vlc=0,data_partitioned=0,
   resync_marker_disable=0)
001 : no RVLC, no data partition, with video packet (reversible_vlc=0,data_partitioned=0,
   resync_marker_disable=1)
010 : no RVLC, with data partition, no video packet (reversible_vlc=0,data_partitioned=1,
   resync_marker_disable=0)
011 : no RVLC, with data partition, with video packet (reversible_vlc=0,data_partitioned=1,
   resync_marker_disable=1)
100 : with RVLC, with data partition, no video packet (reversible_vlc=1,data_partitioned=1,
   resync_marker_disable=0)
101 : with RVLC, with data partition and video packet (reversible_vlc=1,data_partitioned=1,
   resync_marker_disable=1)
110 : forbidden
111 : forbidden

Interlaced Coding Flag (ICF) (1 bit) :
0 : without interlaced coding tools (interlaced=0)
1 : with interlaced coding tools (interlaced=1)

Sprite Coding Flag (SCF) (2 bits) :
00 : without sprite coding (sprite_enable=0)
01 : with static sprite coding (sprite_enable=1 and low_latency_sprite_enable=0)
10 : with on-line sprite coding (sprite_enable=1 and low_latency_sprite_enable=1)
11 : reserved

B-VOP Coding Flag (BVCF) (2 bits) :
00 : B-VOP with direct mode coding
01 : B-VOP without direct mode coding
10 : no B-VOP (VOP_coding_type != "B")
11 : forbidden.

Infra DC/AC Prediction Flag (IDAPF) (2 bits) :
00 : with both DC and AC prediction (ac_pred_flag=1)
01 : with DC prediction, without AC prediction (ac_pred_flag=0)
10 : DC prediction with dc_scaler=8, No AC prediction (ac_pred_flag=0)
11 : without DC/AC prediction and dc_scaler=8.

Advanced Prediction Flag (APF) (2 bits) :
00 : without advanced prediction
01 : advanced prediction with no OBMC
   (obmc_disable=1)
10 : advanced prediction with OBMC (obmc_disable=0)
11 : reserved

Quarter Pixel Coding Flag (OPCF) (1 bit) :
0 : without quarter pixel coding
1 : with quarter pixel coding

Global Motion Compensation Flag (GMCF) (1 bit) :
0 : without GMC
1 : with GMC

Shape-Adaptive DCT Flag (SADCTF) (1 bit) :
0 : without Shape-Adaptive DCT
1 : with Shape-Adaptive DCT

### Reserved Bits (RB) : (11 bits)

This is a reserved field for possible future expansion and applications.

The proposed Coding-Tool Configuration Map (CTCM) can be used, for example, in streaming video applications. Streaming video is the term commonly used for one way, packet-based transmission of compressed video bitstreams over networks, especially the Internet.

The Internet is a shared datagram network. Packets sent on the Internet often experience unpredictable delay and jitter. However, streaming video applications require accurate timing for transmission and playback. Real-time transport protocols (e.g., RTP) provide timestamping, sequence numbering, and other mechanisms to handle the timing issues. These protocols also provide support for packet-loss detection, security and content identification of end-to-end transport for data over datagram networks (e.g., UDP - User Datagram Protocol/IP). In practice, a real-time transport protocol is usually implemented within the application. Many issues, such as packet recovery and congestion control, have to be implemented at the application level.

In streaming video applications, compressed video bitstreams are carried as the payload of transport packets. In general, for each transport packet, the transport header is followed by a CODEC (e.g. H.261, H.263, and MPEG-4) payload header, which is then followed by a number of bytes of a CODEC-compressed bitstream. As noted above, the CTCM can be carried as a MPEG-4-video-specific RTCP control packet.

Accordingly, the present invention extends a real-time transport protocol to designate the coding tools used for coding a video bitstream.

Note that the control data/fields of the CTCM packet can be carried by either a specific RTP packet or a RTCP packet. Such a packet should be repeatedly sent to synchronize the new customers (e.g., users/terminals). The MPEG-4 video data is sent as the RTP data packets (with a MPEG-4 video type).

The CTCM data can be carried as payload in either an RTCP or specific RTP packet.

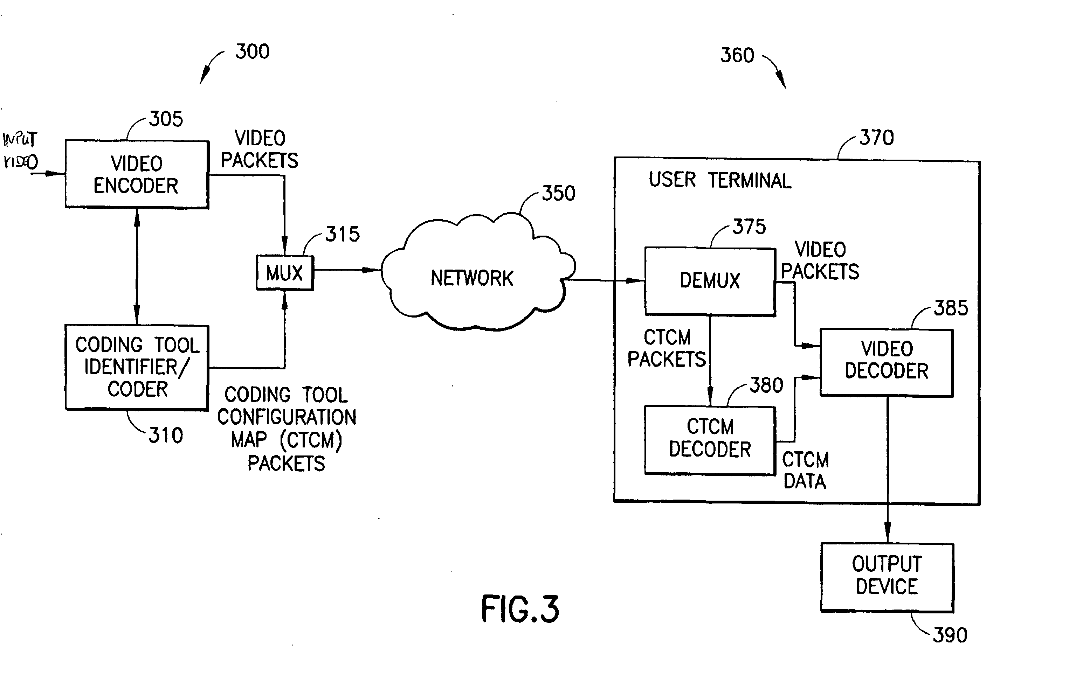

FIG. 3 illustrates the communication of video packets and CTCM packets from an encoder to a decoder in accordance with the invention.

An encoding side 300 includes a video encoder 305 for receiving and coding an input video signal using one or more available coding tools. A coding tools identifier/coder 310 communicates with the video-encoder 305 to provide the CTCM packet 100 of FIG. 1. In particular, the relevant coding tools syntax are examined to determine which coding tools are being used. A look-up table or the like at the function 310 may be used for this purpose.

For example, a look up table may correlate the MPEG-4 syntax "interlaced=0" to the CTCM packet field value "ICF=0".

Moreover, it possible for the coding tools that are used to change over time for a video sequence. Accordingly, the CTCM packet can be updated at specific times based on a user setting, e.g., every 15 frames.

The CTCM packet or packets are multiplexed at a mux 315 with the coded video packets (e.g., video bitstream), which conforms, as an example, to the MPEG-4 standard, and communicated across a network 350 to a decoding side 360.

The network 350 may comprise essentially any type of communication network, including a computer network, such as the Internet, and/or a broadband communication network, such as a satellite or cable television network, a telephone link, and so forth.

The decoding side 360 includes a user/subscriber terminal 370 with a demux 375 that demultiplexes the video packets and CTCM packets received from the network 350. The video packets are provided to a video decoder 385, while the CTCM packets are provided to a CTCM decoder 380, which decodes the relevant fields to determine which coding tools were used by the video encoder 305 to encode the video packets. In particular, a look up table may be used at the function 380 to correlate the fields in the CTCM packet with the relevant coding tools syntax.

For example, a look up table may correlate the CTCM packet field value "ICF=0" to the MPEG-4 syntax "interlaced=0".

The coding tools information is provided as CTCM data to the video decoder 385 for use in decoding the video packets from the demux 375 using the designated coding tools. Finally, the video decoder 385 decodes the video packets to provide a signal to an output device 390, such as a television or video monitor.

The terminal 370 may represent an example user terminal in a terminal population that receives the video packets and CTCM packets, and/or that accesses the network 350.

The user terminal 370 may include a personal computer, television set-top box, cable modem, wireless telephone, a portable "personal digital assistant", or other appliance that is capable of accessing the network 350.

Alternatively, it is possible for the CTCM packets to be provided via a separate communication channel than the coded video packets, thereby avoiding the muxing of the video packets and the CTCM packets.

It should now be appreciated that the present invention provides a novel Coding-Tool Configuration Map (CTCM). By using the CTCM as an MPEG-4 video specific control packet in accordance with the invention, one can configure a video decoder at the appropriate application level such that video coding tools can serve their best use. The invention allows the use of a customized set of coding tools that need not correspond to a predetermined profile. The tools which are most advantageous for a particular application can therefore be selected without requiring the use of all coding tools in a profile, which may be inefficient and unnecessary.

For example, in a streaming video application, it is desirable to have B-VOPs to improve coding efficiency. However, the predetermined profile definition (core profile, PI=3) that allows B-VOPs also requires the use of binary shape coding. However, currently for the streaming video application, there is no demand for binary shape coding. Moreover, circuitry for binary shape coding is very expensive to build. The invention therefore allows the creation of a customized set of coding tools that includes B-VOPs but not binary shape coding.

Among other applications, the CTCM concept is particularly useful in facilitating the implementation of streaming video for, e.g., multicast of video over IP networks.

## Claims

1. A method for signaling at least one decoder to identify coding tools used to encode a video stream, comprising the steps of:
assembling at least one coding tools control packet (170) that designates which coding tools are used in coding the video stream; and
providing said at least one coding tools control packet to a receiver according to real-time transport protocol;
wherein a decoder at the receiver is adapted to process said at least one coding tools control packet provided thereto to determine which coding tools were used in coding the video stream, and to decode the video stream using corresponding decoding tools present in the receiver.

2. The method of claim 1, wherein:
the at least one coding tools control packet and the video stream are provided from an encoder to the receiver via a common network.

3. The method of claim 1 or 2, wherein:
the at least one coding tools control packet is multiplexed with the video stream for communication to the receiver via a network.

4. The method of one of claims 1 to 3, wherein:
the video stream is provided to the receiver as streaming video via a network.

5. The method of claim 4, wherein:
the network comprises a shared datagram network.

6. The method of one of claims 1 to 5, wherein:
the video stream is multicast to the receiver via a network.

7. The method of one of claims 1 to 6, wherein:
the coding tools used in coding the video stream conform to an MPEG-4 video standard.

8. The method of one of claims 1 to 7, wherein the at least one coding tools control packet designates a coding status of the video stream regarding at least one of:
whether scalability is used, and if so, which type;
whether 8-bit coding is used;
whether alpha plane coding is used, and if so, which type;
whether error-resilient coding tools are used, and if so, which type;
whether interlaced coding is used;
whether sprite coding is used, and if so, which type;
whether B-VOP coding is used, and if so, whether direct mode coding is used;
whether intra DC and/or AC prediction is used, and if so, which type;
whether advanced prediction is used, and if so, which type;
whether quarter pixel coding is used;
whether global motion compensation is used; and
whether shape-adaptive DCT is used.

9. The method of one of claims 1 to 8, wherein:
the at least one coding tools control packet is assembled by providing fields therein based on corresponding syntax elements of the coding tools used in coding the video stream.

10. The method of claim 9, wherein:
a look-up table is used for providing the fields as a function of the corresponding syntax element.

11. The method of one of claims 1 to 10, wherein:
the video stream is non-profiled; and
the at least one coding tools control packet designates a customized set of coding tools.

12. A decoding method for identifying coding tools used to encode a video stream, comprising the steps of:
receiving the video stream at a receiver;
recovering, at a decoder at the receiver, at least one coding tools control packet (170) that designates which coding tools are used in coding the video stream; and
processing the at least one recovered coding tools control packet to determine which coding tools were used in coding the video stream, and decoding the video stream using corresponding decoding tools present in the receiver;
wherein the at least one coding tools control packet is provided to the receiver according to real-time transport protocol.

13. The method of claim 12, wherein:
the at least one coding tools control packet and the video stream are provided from an encoder to the receiver via a common network.

14. The method of claim 12 or 13, wherein:
the at least one coding tools control packet is multiplexed with the video stream for communication to the receiver via a network.

15. The method of claim 13, wherein:
the video stream is provided to the receiver as streaming video via a network.

16. The method of claim 15, wherein:
the network comprises a shared datagram network.

17. The method of on of claims 12 to 16, wherein:
the video stream is multicast to the receiver via a network.

18. The method of one of claims 12 to 17, wherein:
the coding tools used in coding the video stream conform to an MPEG-4 video standard.

19. The method of one of claims 12 to 18, wherein the at least one coding tools control packet designates a coding status of the video stream regarding at least one of:
whether scalability is used, and if so, which type;
whether 8-bit coding is used;
whether alpha plane coding is used, and if so, which type;
whether error-resilient coding tools are used, and if so, which type;
whether interlaced coding is used;
whether sprite coding is used, and if so, which type;
whether B-VOP coding is used, and if so, whether direct mode coding is used;
whether intra DC and/or AC prediction is used, and if so, which type;
whether advanced prediction is used, and if so, which type;
whether quarter pixel coding is used;
whether global motion compensation is used; and
whether shape-adaptive DCT is used.

20. The method of one of claims 12 to 19, wherein:
the at least one coding tools control packet comprises fields therein that are assembled based on corresponding syntax elements of the coding tools used in coding the video stream.

21. The method of claim 20, wherein:
a look-up table is used for determining which coding tools are used in coding the video stream based on the corresponding syntax element.

22. The method of one of claims 12 to 21, wherein:
the video stream is non-profiled; and
the at least one coding tools control packet designates a customized set of coding tools.

23. An apparatus for signaling a decoder to identify coding tools used to encode a video stream, comprising:
means (300) for assembling at least one coding tools control packet (170) that designates which coding tools are used in coding the video stream; and
means (350) for providing said at least one coding tools control packet to a receiver (370) according to real-time transport protocol;
wherein a decoder (380) at the receiver (370) is adapted to process said at least one coding tools control packet provided thereto to determine which coding tools were used in coding the video stream, and to decode the video stream using corresponding decoding tools present in the receiver.

24. A decoder apparatus for identifying coding tools used to encode a video stream, comprising:
means (370) for receiving the video stream at decoder (360);
means (375) for recovering, at the decoder, at least one coding tools control packet (170) that designates which coding tools are used in coding the video stream; and
means (380, 385) for processing the at least one recovered coding tools control packet to determine which coding tools were used in coding the video stream, and decoding the video stream using corresponding decoding tools present in the receiving means (370);
wherein the at least one coding tools control packet is provided to the receiving means (370) according to real-time transport protocol.

## Patentansprüche

1. Ein Verfahren, um mindestens einem Decodierer zu signalisieren, Codierwerkzeuge, die zum Codieren eines Videostroms verwendet werden, zu erkennen, das folgende Schritte beinhaltet:
Asemblieren von mindestens einem Codierwerkzeugsteuerpaket (170), das bestimmt, welche Codierwerkzeuge beim Codieren des Videostroms verwendet werden; und
Versorgen des Empfängers mit mindestens einem Codierwerkzeugsteuerpaket gemäß dem Echtzeit-Transportprotokoll;
wobei ein Decodierer an dem Empfänger angepasst ist, um das mindestens eine diesem bereitgestellte Codierwerkzeugsteuerpaket zu verarbeiten, um zu ermitteln, welche Codierwerkzeuge zum Codieren des Videostroms verwendet wurden, und um den Videostrom unter Verwendung von entsprechenden im Empfänger vorhandenen Decodierwerkzeugen zu decodieren.

2. Verfahren gemäß Anspruch 1, wobei:
das mindestens eine Codierwerkzeugsteuerpaket und der Videostrom über ein herkömmliches Netz von einem Codierer dem Empfänger bereitgestellt werden.

3. Verfahren gemäß Anspruch 1 oder 2, wobei:
das mindestens eine Codierwerkzeugsteuerpaket zum Übertragen an den Empfänger über ein Netz mit dem Videostrom multiplexiert
wird.

4. Verfahren gemäß einem der Ansprüche 1 bis 3, wobei:
der Videostrom dem Empfänger über ein Netz als Streaming-Video bereitgestellt wird.

5. Verfahren gemäß Anspruch 4, wobei:
das Netz ein Gemeinschafts-Datagrammnetz beinhaltet.

6. Verfahren gemäß einem der Ansprüche 1 bis 5, wobei:
der Videostrom über ein Netz an den Empfänger sammelgesendet wird.

7. Verfahren gemäß einem der Ansprüche 1 bis 6, wobei:
die Codierwerkzeuge, die beim Codieren des Videostroms verwendet werden, einen MPEG-4-Videostandard erfüllen.

8. Verfahren gemäß einem der Ansprüche 1 bis 7, wobei das mindestens eine Codierwerkzeugsteuerpaket einen Codierstatus des Videostroms, in Bezug auf mindestens eines von Folgendem, bestimmt:
ob Skalierbarkeit verwendet wird und, wenn ja, welche Art;
ob 8-Bit-Codierung verwendet wird;
ob Alpha-Plane-Codierung verwendet wird, und wenn ja, welche Art; ob fehlerstabile Codierwerkzeuge verwendet werden, und wenn ja, welche Art;
ob verschachteltes Codieren verwendet wird;
ob Sprite-Codierung verwendet wird und, wenn ja, welche Art;
ob B-VOP-Codierung verwendet wird und, wenn ja, ob Direktmodus-Codierung verwendet wird;
ob interne Gleichstrom- und/oder Wechselstrom-Prädiktion verwendet wird und, wenn ja, welche Art;
ob erweiterte Prädiktion verwendet wird und, wenn ja, welche Art;
ob Viertelpixel-Codierung verwendet wird;
ob globale Bewegungskompensation verwendet wird; und
ob formadaptives DCT verwendet wird.

9. Verfahren gemäß einem der Ansprüche 1 bis 8, wobei:
das mindestens eine Codierwerkzeugsteuerpaket assembliert wird, indem darin Teilbilder, die auf entsprechenden Syntaxelementen der zum Codieren des Videostroms verwendeten Codierwerkzeuge basieren, bereitgestellt werden.

10. Verfahren gemäß Anspruch 9, wobei:
eine Verweistabelle zum Bereitstellen der Teilbilder als eine Funktion des entsprechenden Syntaxelements verwendet wird.

11. Verfahren gemäß einem der Ansprüche 1 bis 10, wobei:
der Videostrom nicht profiliert ist; und
das mindestens eine Codierwerkzeugsteuerpaket einen kundenspezifischen Codierwerkzeugsatz bestimmt.

12. Ein Decodierverfahren zum Erkennen von Codierwerkzeugen, die zum Codieren eines Videostroms verwendet werden, das folgende Schritte beinhaltet:
Empfangen des Videostroms an einem Empfänger;
Wiederherstellen an einem Decodierer an dem Empfänger von mindestens einem Codierwerkzeugsteuerpaket (170), das bestimmt, welche Codierwerkzeuge zum Codieren des Videostroms verwendet werden; und
Verarbeiten des mindestens einen wiederhergestellten Codierwerkzeugsteuerpakets, um zu ermitteln, welche Codierwerkzeuge beim Codieren des Videostroms verwendet wurden, und Decodieren des Videostroms unter Verwendung entsprechender, im Empfänger vorhandener Decodierwerkzeuge;
wobei dem Empfänger das mindestens eine Codierwerkzeugsteuerpaket gemäß dem Echtzeit-Transportprotokoll bereitgestellt wird.

13. Verfahren gemäß Anspruch 12, wobei:
das mindestens eine Codierwerkzeugsteuerpaket und der Videostrom über ein herkömmliches Netz von einem Codierer dem Empfänger bereitgestellt werden.

14. Verfahren gemäß Anspruch 12 oder 13, wobei:
das mindestens eine Codierwerkzeugsteuerpaket zum Übertragen an den Empfänger über ein Netz mit dem Videostrom multiplexiert wird.

15. Verfahren gemäß Anspruch 13, wobei:
der Videostrom dem Empfänger über ein Netz als Streaming-Video bereitgestellt wird.

16. Verfahren gemäß Anspruch 15, wobei:
das Netz ein Gemeinschafts-Datagrammnetz beinhaltet.

17. Verfahren gemäß einem der Ansprüche 12 bis 16, wobei:
der Videostrom über ein Netz an den Empfänger sammelgesendet wird.

18. Verfahren gemäß einem der Ansprüche 12 bis 17, wobei:
die Codierwerkzeuge, die beim Codieren des Videostroms verwendet werden, einen MPEG-4-Videostandard erfüllen.

19. Verfahren gemäß einem der Ansprüche 12 bis 18, wobei das mindestens eine Codierwerkzeugsteuerpaket einen Codierstatus des Videostroms, in Bezug auf mindestens eines von Folgendem, bestimmt:
ob Skalierbarkeit verwendet wird und, wenn ja, welche Art;
ob 8-Bit-Codierung verwendet wird;
ob Alpha-Plane-Codierung verwendet wird und, wenn ja, welche Art;
ob fehlerstabile Codierwerkzeuge verwendet werden und, wenn ja, welche Art;
ob verschachteltes Codieren verwendet wird;
ob Sprite-Codierung verwendet wird und, wenn ja, welche Art;
ob B-VOP-Codierung verwendet wird und, wenn ja, ob Direktmodus-Codierung verwendet wird;
ob interne Gleichstrom- und/oder Wechselstrom-Prädiktion verwendet wird und, wenn ja, welche Art;
ob erweiterte Prädiktion verwendet wird und, wenn ja, welche Art;
ob Viertelpixel-Codierung verwendet wird;
ob globale Bewegungskompensation verwendet wird; und
ob formadaptives DCT verwendet wird.

20. Verfahren gemäß einem der Ansprüche 12 bis 19, wobei:
das mindestens eine Codierwerkzeugsteuerpaket darin Teilbilder, die auf entsprechenden Syntaxelementen der beim Codieren des Videostroms verwendeten Codierwerkzeuge basieren, assembliert werden, beinhaltet.

21. Verfahren gemäß Anspruch 20, wobei:
eine Verweistabelle verwendet wird, um zu ermitteln, welche Codierwerkzeuge beim Codieren des auf dem entsprechenden Syntaxelement basierenden Videostroms verwendet werden.

22. Verfahren gemäß einem der Ansprüche 12 bis 21, wobei:
der Videostrom nicht profiliert ist; und
das mindestens eine Codierwerkzeugsteuerpaket einen kundenspezifischen Codierwerkzeugsatz bestimmt.

23. Eine Vorrichtung, um einem Decodierer zu signalisieren, Codierwerkzeuge, die zum Codieren eines Videostroms verwendet werden, zu erkennen, die Folgendes beinhaltet:
ein Mittel (300) zum Assemblieren von mindestens einem Codierwerkzeugsteuerpaket (170), das bestimmt, welche Codierwerkzeuge beim Codieren des Videostroms verwendet werden; und
ein Mittel (350) zum Versorgen eines Empfängers (370) mit mindestens einem Codierwerkzeugsteuerpaket gemäß dem Echtzeit-Transportprotokoll;
wobei ein Decodierer (380) an dem Empfänger (370) angepasst ist, um das mindestens eine diesem bereitgestellte Codierwerkzeugsteuerpaket zu verarbeiten, um zu ermitteln, welche Codierwerkzeuge zum Codieren des Videostroms verwendet wurden, und um den Videostrom unter Verwendung von entsprechenden im Empfänger vorhandenen Decodierwerkzeugen zu decodieren.

24. Eine Decodiervorrichtung zum Erkennen von Codierwerkzeugen, die zum Codieren eines Videostroms verwendet werden, die Folgendes beinhaltet:
ein Mittel (370) zum Empfangen des Videostroms am Decodierer (360);
ein Mittel (375) zum Wiederherstellen am Decodierer von mindestens einem Codierwerkzeugsteuerpaket (170), das bestimmt, welche Codierwerkzeuge zum Codieren des Videostroms verwendet werden; und
Mittel (380, 385) zum Verarbeiten des mindestens einen wiederhergestellten Codierwerkzeugsteuerpakets, um zu ermitteln, welche Codierwerkzeuge zum Codieren des Videostroms verwendet wurden, und zum Decodieren des Videostroms unter Verwendung entsprechender im Empfänger vorhandener Decodierwerkzeuge (370);
wobei dem Empfangsmittel (370) das mindestens eine Codierwerkzeugsteuerpaket gemäß dem Echtzeit-Transportprotokoll bereitgestellt wird.

## Revendications

1. Un procédé pour signaler à un décodeur au moins d'identifier des outils de codage utilisés pour encoder un flux vidéo, comportant les étapes de :
assembler un paquet de commande d'outils de codage au moins (170) qui désigne quels outils de codage sont utilisés dans le codage du flux vidéo ; et
fournir cedit paquet de commande d'outils de codage au moins à un récepteur selon un protocole de transport en temps réel ;
dans lequel un décodeur au récepteur est adapté pour traiter cedit paquet de commande d'outils de codage au moins qui lui est fourni pour déterminer quels outils de codage sont utilisés dans le codage du flux vidéo, et pour décoder le flux vidéo à l'aide des outils de décodage correspondants présents dans le récepteur.

2. Le procédé de la revendication 1, dans lequel :
ce paquet de commande d'outils de codage au moins et le flux vidéo sont fournis d'un encodeur au récepteur par le biais d'un réseau commun.

3. Le procédé de la revendication 1 ou de la revendication 2, dans lequel :
ce paquet de commande d'outils de codage au moins est multiplexé avec le flux vidéo pour être communiqué au récepteur par le biais d'un réseau.

4. Le procédé de l'une des revendications 1 à 3, dans lequel :
le flux vidéo est fourni au récepteur en tant que vidéo en flux par le biais d'un réseau.

5. Le procédé de la revendication 4, dans lequel :
le réseau comporte un réseau de datagrammes partagé.

6. Le procédé de l'une des revendications 1 à 5, dans lequel :
le flux vidéo est multidiffusé au récepteur par le biais d'un réseau.

7. Le procédé de l'une des revendications 1 à 6, dans lequel :
les outils de codage utilisés dans le codage du flux vidéo sont conformes à une norme vidéo MPEG-4.

8. Le procédé de l'une des revendications 1 à 7, dans lequel ce paquet de commande d'outils de codage au moins désigne un statut de codage du flux vidéo en ce qui concerne au moins de savoir :
si un potentiel de montée en charge est utilisé et, si oui, quel type ;
si un codage 8 bits est utilisé ;
si un codage plan alpha est utilisé et, si oui, quel type ;
si des outils de codage tolérants aux erreurs sont utilisés et, si oui, quel type ;
si un codage entrelacé est utilisé ;
si un codage de sprites est utilisé et, si oui, quel type ;
si un codage B-VOP est utilisé et, si oui, si un codage en mode direct est utilisé ;
si une prédiction intra CC et/ou CA est utilisée et, si oui, quel type ;
si une prédiction évoluée est utilisée et, si oui, quel type ;
si un codage de quart de pixel est utilisé ;
si une compensation de mouvement globale est utilisée ; ou
si une TCD adaptative aux formes est utilisée.

9. Le procédé de l'une des revendications 1 à 8, dans lequel :
ce paquet de commande d'outils de codage au moins est assemblé en fournissant des champs dans celui-ci sur la base d'éléments de syntaxe correspondants des outils de codage utilisés dans le codage du flux vidéo.

10. Le procédé de la revendication 9, dans lequel :
une table de conversion est utilisée pour fournir les champs en fonction de l'élément de syntaxe correspondant.

11. Le procédé de l'une des revendications 1 à 10, dans lequel :
le flux vidéo est non profilé ; et
ce paquet de commande d'outils de codage au moins désigne un ensemble personnalisé d'outils de codage.

12. Un procédé de décodage pour identifier des outils de codage utilisés pour encoder un flux vidéo, comportant les étapes de :
recevoir le flux vidéo à un récepteur ;
récupérer, à un décodeur au récepteur, un paquet de commande d'outils de codage au moins (170) qui désigne quels outils de codage sont utilisés dans le codage du flux vidéo ; et
traiter ce paquet de commande d'outils de codage récupéré au moins pour déterminer quels outils de codage ont été utilisés dans le codage du flux vidéo, et décoder le flux vidéo à l'aide des outils de décodage correspondants présents dans le récepteur ;
dans lequel ce paquet de commande d'outils de codage au moins est fourni au récepteur selon un protocole de transport en temps réel.

13. Le procédé de la revendication 12, dans lequel :
ce paquet de commande d'outils de codage au moins et le flux vidéo sont fournis d'un encodeur au récepteur par le biais d'un réseau commun.

14. Le procédé de la revendication 12 ou de la revendication 13, dans lequel :
ce paquet de commande d'outils de codage au moins est multiplexé avec le flux vidéo pour être communiqué au récepteur par le biais d'un réseau.

15. Le procédé de la revendication 13, dans lequel :
le flux vidéo est fourni au récepteur en tant que vidéo en flux par le biais d'un réseau.

16. Le procédé de la revendication 15, dans lequel :
le réseau comporte un réseau de datagrammes partagé.

17. Le procédé de l'une des revendications 12 à 16, dans lequel :
le flux vidéo est multidiffusé au récepteur par le biais d'un réseau.

18. Le procédé de l'une des revendications 12 à 17, dans lequel :
les outils de codage utilisés dans le codage du flux vidéo sont conformes à une norme vidéo MPEG-4.

19. Le procédé de l'une des revendications 12 à 18, dans lequel ce paquet de commande d'outils de codage au moins désigne un statut de codage du flux vidéo en ce qui concerne au moins de savoir :
si un potentiel de montée en charge est utilisé et, si oui, quel type ;
si un codage 8 bits est utilisé ;
si un codage plan alpha est utilisé et, si oui, quel type ;
si des outils de codage tolérants aux erreurs sont utilisés et, si oui, quel type ;
si un codage entrelacé est utilisé ;
si un codage de sprites est utilisé et, si oui, quel type ;
si un codage B-VOP est utilisé et, si oui, si un codage en mode direct est utilisé ;
si une prédiction intra CC et/ou CA est utilisée et, si oui, quel type ;
si une prédiction évoluée est utilisée et, si oui, quel type ;
si un codage de quart de pixel est utilisé ;
si une compensation de mouvement globale est utilisée ; ou
si une TCD adaptative aux formes est utilisée.

20. Le procédé de l'une des revendications 12 à 19, dans lequel :
ce paquet de commande d'outils de codage au moins comporte des champs dans celui-ci qui sont assemblés sur la base d'éléments de syntaxe correspondants des outils de codage utilisés dans le codage du flux vidéo.

21. Le procédé de la revendication 20, dans lequel :
une table de conversion est utilisée pour déterminer quels outils de codage sont utilisés dans le codage du flux vidéo sur la base de l'élément de syntaxe correspondant

22. Le procédé de l'une des revendications 12 à 21, dans lequel :
le flux vidéo est non profilé ; et
ce paquet de commande d'outils de codage au moins désigne un ensemble personnalisé d'outils de codage.

23. Un appareil pour signaler à un décodeur d'identifier des outils de codage utilisés pour encoder un flux vidéo, comportant :
un moyen (300) pour assembler un paquet de commande d'outils de codage au moins (170) qui désigne quels outils de codage sont utilisés dans le codage du flux vidéo ; et
un moyen (350) pour fournir cedit paquet de commande d'outils de codage au moins à un récepteur (370) selon un protocole de transport en temps réel ;
dans lequel un décodeur (380) au récepteur (370) est adapté pour traiter cedit paquet de commande d'outils de codage au moins qui lui est fourni pour déterminer quels outils de codage sont utilisés dans le codage du flux vidéo, et pour décoder le flux vidéo à l'aide d'outils de décodage correspondants présents dans le récepteur.

24. Un appareil décodeur pour identifier des outils de codage utilisés pour encoder un flux vidéo, comportant :
un moyen (370) pour recevoir le flux vidéo au décodeur (360) ;
un moyen (375) pour récupérer, au décodeur, un paquet de commande d'outils de codage au moins (170) qui désigne quels outils de codage sont utilisés dans le codage du flux vidéo ; et
un moyen (380, 385) pour traiter ce paquet de commande d'outils de codage récupéré au moins pour déterminer quels outils de codage ont été utilisés dans le codage du flux vidéo, et décoder le flux vidéo à l'aide d'outils de décodage correspondants présents dans le moyen récepteur (370) ;
dans lequel ce paquet de commande d'outils de codage au moins est fourni au moyen récepteur (370) selon un protocole de transport en temps réel.
